# EUROPEAN PATENT SPECIFICATION

(11) **EP 0 542 368 B1**
(45) Date of publication and mention of the grant of the patent: **20.05.1998**
(21) Application number: 92203462.4
(22) Date of filing: 11.11.1992
(51) Int. Cl.: F16L 3/22, H02G 3/04

(54) **Cable ladder track**
Kabelleiter
Echelle à câbles

(30) Priority: 12.11.1991 NL 9101887
(43) Date of publication of application: 19.05.1993
(73) Proprietor: GOUDA HOLLAND B.V., NL-2851 BL Haastrecht (NL)
(72) Inventor: Boot, Pieter Herman, NL-2811 HP Reeuwijk (NL)
(74) Representative: Smulders, Theodorus A.H.J., Ir.

(56) References cited:
- EP-A- 0 330 098
- DE-U- 8 805 483
- GB-A- 175 157
- GB-A- 2 139 824

## Description

This invention relates to a ladder-shaped body as described in the preamble of claim 1.

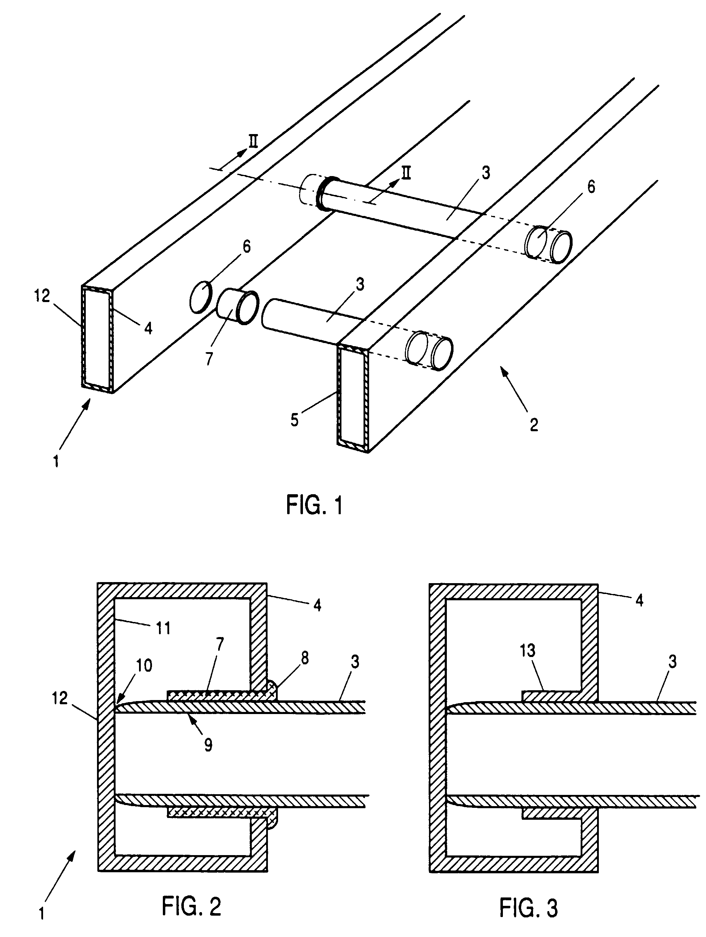

Such a ladder-shaped body is known from GB-A-2 139 824. The manner in which the longitudinal sections are coupled with the transverse sections is very laborious and requires many operations. Moreover, the solution given herein is only possible with longitudinal and transverse sections having a square or rectangular cross-section, while, furthermore, the transverse section must be open so as to enable the mounting of the insert 50, see the above GB patent. In fact, to enable the mounting, this insert 50 must be passed through the interior of the transverse section, the purpose of which is, as further indicated in column 2, lines 26-40 of the above GB patent, to press outwards the tongue 40, arranged in the transverse sections, thus ensuring that the transverse sections cannot fall out of the longitudinal sections. In this construction the transverse section must further necessarily have a square or rectangular cross-section, because otherwise no clamping force can be obtained. The clamping force is obtained with the sides of the rectangle (see, e.g., Fig. 2 of the above GB patent) which rest against the longitudinal sections.

This known construction is therefore completely unsuitable for, e.g., tubular sections having circular cross-sections.

In the other conventional ladder tracks hollow longitudinal sections, having for instance a rectangular cross-section, are used which are completely pierced, in the direction transverse to the longitudinal direction, for inserting and fixing the transverse sections to the longitudinal sections, as for instance indicated in GB-A-175 157.

In such a ladder track, the transverse sections have their free ends extending through the longitudinal sections. To fix these transverse sections to the longitudinal sections and retain the longitudinal sections at a fixed distance from each other, these longitudinal sections are for instance clamped between flanges provided on the transverse sections, for instance in the form of upset edges. For this purpose, first, an upset edge is provided on the transverse sections, spaced from the end faces of these transverse sections, whereafter the transverse section is inserted into the throughbore of the longitudinal section until the upset edge rests against the inside end of the longitudinal section, and then the part of the transverse section that projects from the other end of the throughbore is upset, so as to fixedly secure the transverse section to the longitudinal section. The fixation can be obtained not only by the upsetting method mentioned hereinabove, but also by means of welding or by means of bolts and nuts. It is clear that this manner of fixation is time-consuming and expensive and that projecting parts in the form of the above-mentioned upset edges, welding seams, etc are present. When, as described above, such ladder tracks are arranged in dusty spaces, such as for instance a flour factory, it is clear that flour residues stick to the ladder track and may find their way even into the hollow sections of the ladder track. For hygienic reasons, therefore, nowadays strict government requirements are set so as to prevent this.

For these reasons, therefore, it is desired to provide a ladder track of the smoothest possible design with as few openings and projecting parts as possible, in or on which flour residues and the like might deposit, while the manufacture can be realized in a simple, little time consuming and hence inexpensive manner.

The object of the invention is to overcome the above-mentioned drawbacks.

This object can be accomplished by the characterizing features of claim 1.

With the construction thus obtained in accordance with the invention, a cable ladder track surface is obtained that has a very high degree of smoothness.

According to the invention, the sleeve-shaped clamping device may be a clamping sleeve with a flange formed thereon, which clamping sleeve can be moved into an opening until the flange rests against the inside wall.

In another embodiment of at least similar importance, the above object can be accomplished in that, according to the invention, there is provided a sleeve-shaped clamping device which is a shell-shaped body formed on the inside wall of the longitudinal section and pointing in the direction of the interior of the hollow longitudinal sections, said shell-shaped body being obtained by flanging inward the material of the inside wall of a longitudinal section, such that the inside diameter of the opening so formed is smaller than the outside diameter of at least the free ends of a transverse section so as to clamp, as the free ends are inserted into the corresponding opening, the corresponding transverse section in the opening.

Moreover, with the above-indicated construction according to the invention, the ladder track can be assembled in a very simple manner in that the transverse sections can be mounted mechanically on the longitudinal sections in a very rapid manner by keeping the transverse sections at the desired mutual distance, with the two longitudinal sections being pressed in the axial direction of the transverse sections, so as to press the free ends of these transverse sections into the openings of the longitudinal sections, until the free end faces of the transverse sections come to rest against the inside of the outside surface of the longitudinal sections.

By using, according to the invention, the above-mentioned sleeve-shaped clamping devices, the advantage is obtained that the diameter tolerances of the openings and of the free ends of the transverse sections are not critical. The only requirement is that the diameter of the free ends of the transverse sections is slightly greater than the inside diameter of the sleeve-shaped clamping device. The point is that after the free ends, which are preferably of slightly tapering configuration, have been Inserted into the sleeve of the clamping devices arranged in the opening, the sleeve will expand so as to effect the desired clamping between the free ends and the opening in question.

Such clamping devices have a further advantage in that during the pressing process they provide better guidance for the free ends of the transverse sections to be guided, thereby enabling alignment of any transverse sections that are not entirely in alignment.

The Invention will now be explained on the basis of one embodiment and with reference to the accompanying drawings. In said drawings:
Fig. 1 is a perspective view of a ladder track according to the invention;
Fig. 2 is a section taken on the line II-II of Fig. 1; and
Fig. 3 is an alternative embodiment of Fig. 2.

The ladder track shown in Fig. 1 is made up of two parallel and mutually spaced hollow longitudinal sections 1 and 2 which are coupled to each other by means of hollow transverse sections 3. The transverse sections likewise extend parallel to each other and are preferably spaced apart equally. The longitudinal sections and transverse sections preferably have rectangular and circular cross-sections, respectively.

The manner in which the transverse sections can be coupled to the longitudinal sections is shown in more detail in a first embodiment in Fig. 2. Fig. 2 shows how for instance the transverse sections are coupled to one of the longitudinal sections 1. It will be clear that the coupling to the other longitudinal section 2 is identical.

To that end, openings 6 are provided in the facing internal surfaces 4, 5 of the longitudinal sections 1, 2. In these openings 6, clamping sleeves 7 with flange 8 can be fitted.

Fitted in these clamping sleeves 7 are the free ends 9 of the transverse sections 3, with the end faces 10 of these transverse sections preferably resting against the inside 11 of the outside surface 12 of the longitudinal sections 1 and 2, respectively.

By choosing the diameter of at least the free ends 9 of the transverse sections to be slightly greater than the inside diameter of the clamping sleeves, it is ensured that, as the transverse sections are pressed into the clamping sleeves, the material of the clamping sleeves is expanded, so that these clamping sleeves are wedged between the edges of the openings 6 and the free ends 9 of the transverse sections. This provides for a rock-solid fixation of the transverse sections in the longitudinal sections and moreover ensures that the longitudinal sections are spaced apart parallel at a fixed distance when the free end faces 10 are located against the inside 11 of the outside surface 12 of the longitudinal sections 1 and 2, respectively.

The embodiment shown in Fig. 3 is a variant of the embodiment shown in Fig. 2, the only difference being that the separate clamping sleeve 7 has been replaced with a shell-shaped body 13, which is obtained by flanging inwards the material of the inside wall 4, 5 of the longitudinal section 1,2, in such a manner that the opening so formed is also the opening 6 for receiving a transverse section 3. By providing that the inside diameter of this shell-shaped body 13 is slightly smaller than the diameter of at least the free ends 9 of the transverse sections 3, that shell-shaped body 13 will expand as a free end of a transverse section is pressed into it, with the result that this free end 9 is wedged in the opening. The transition between the shell of the shell-shaped body and the edge of the corresponding opening 6 can form a right angle when carefully finished. Thus, after a transverse section has been fitted, this transverse section will properly adjoin the internal surfaces 4, 5 of the longitudinal section 1, 2. With this embodiment, an even smoother surface is obtained, as the flange 8 of the clamping sleeve 7 shown in Fig. 2 is omitted.

With the embodiments so obtained, a ladder track has been obtained having substantially no projecting parts or undesired openings, i.e., a smooth surface that satisfies the hygienic requirements set.

Moreover, with the embodiments shown, a ladder track can be assembled in a very simple manner.

After the provision of the clamping sleeves 7 or the flanged shell-shaped bodies 13 in the openings 6 of the longitudinal sections 1 and 2, these longitudinal sections are placed in a jig and at the same time the transverse sections 3 are placed in another jig, such that their free ends 9 are in line with the clamping sleeves or the flanged shell-shaped bodies. Then, in hydraulic manner, in one mechanical operation, the longitudinal sections are moved towards each other and the transverse sections are pressed into the clamping sleeves or the flanged shell-shaped bodies until their end faces 10 come to rest against the inside 11 of the longitudinal sections. The clamping sleeves or the flanged shell-shaped bodies, in addition to serving as clamping devices, can also serve as guides for the transverse sections in case for instance a transverse section is not properly aligned.

To facilitate the guidance of the transverse sections, the transverse sections may be of tapering configuration at their ends.

It will be clear that the method of constructing the ladder track described is not exclusively intended for the support of electrical cables and the like, but can also be used for the manufacture of common ladders, for instance aluminum ladders or in other constructions where longitudinal and transverse sections are connected to each other.

## Claims

1. A ladder-shaped body serving in particular as a support for channeling e.g. electrical cables, which ladder-shaped body comprises two substantially parallel and mutually spaced hollow longitudinal sections coupled to each other by means of a plurality of substantially parallel and mutually spaced transverse sections whose free ends extend into openings provided for that purpose in the longitudinal sections, the facing internal surfaces (4; 5) of the two longitudinal sections (1; 2) being provided with openings (6) in which the free ends (9) of the transverse sections (3) can engage in clamping manner, while the end faces of said transverse sections can rest against the inside (11) of the outer surfaces (12) of the longitudinal sections;
**characterized in that** a sleeve-shaped clamping device (7, 8; 13) is arranged between the free ends (9) of a transverse section (3) and the corresponding openings (6), wherein the inside diameter of the clamping sleeve is smaller than the outside diameter of at least the free ends (9) of a transverse section (3), and wherein the outside diameter of the clamping sleeve and the diameter of an opening (6) in the longitudinal sections (1; 2) are such as to enable clamping fixation of said sleeve-shaped clamping device between the corresponding end and opening as the free ends are inserted into a corresponding clamping sleeve.

2. A ladder-shaped body according to claim 1, characterized in that the sleeve-shaped clamping device (7, 8) is a clamping sleeve (7) with a flange (8) formed thereon, which clamping sleeve (7) can be moved into an opening (6) until the flange (8) can rest against the inside wall (4; 5) of the longitudinal section (1; 2).

3. A ladder-shaped body serving in particular as a support for channeling e.g. electrical cables, which ladder-shaped body comprises two substantially parallel and mutually spaced hollow longitudinal sections coupled to each other by means of a plurality of substantially parallel and mutually spaced transverse sections whose free ends extend into openings provided for that purpose in the longitudinal sections, the facing internal surfaces (4; 5) of the two longitudinal sections (1; 2) being provided with openings (6) in which the free ends (9) of the transverse sections (3) can engage in clamping manner, while the end faces of said transverse sections can rest against the inside (11) of the outer surfaces (12) of the longitudinal sections;
**characterized in that** there is provided a sleeve-shaped clamping device (13) which is a shell-shaped body (13) formed on the inside wall (4; 5) of the longitudinal section (1; 2) and pointing in the direction of the interior of the hollow longitudinal sections (1; 2), said shell-shaped body (13) being obtained by flanging inward the material of the inside wall (4; 5) of a longitudinal section (1; 2), such that the inside diameter of the opening (6) so formed is smaller than the outside diameter of at least the free ends (9) of a transverse section (3) so as to clamp, as the free ends (9) are inserted into the corresponding opening (6), the corresponding transverse section (3) in the opening.

## Patentansprüche

1. Leiterförmiger Körper, der insbesondere als Träger zum Kanalisieren von zum Beispiel elektrischen Kabeln dient, wobei der leiterförmige Körper zwei im wesentlichen parallele und gegenseitig beabstandete hohle längsverlaufende Bereiche aufweist, die miteinander über eine Vielzahl im wesentlichen parallele und gegenseitig beabstandete querverlaufende Bereiche verbunden sind, deren freien Enden sich in Öffnungen erstrecken, die zu diesem Zweck in den längsverlaufenden Bereichen ausgebildet sind, wobei die einander zugekehrten Innenseiten (4; 5) der zwei längsverlaufenden Bereiche (1; 2) mit Öffnungen (6) versehen sind, in die die freien Enden (9) der querverlaufenden Bereiche (3) klemmend eingreifen können, während die Stirnseiten dieser querverlaufenden Bereiche an der Innenseite (11) der Außenflächen (12) der längsverlaufenden Bereiche anliegen,
**dadurch gekennzeichnet,**
daß eine hülsenförmige Klemmvorrichtung (7, 8; 13) zwischen den freien Enden (9) eines querverlaufenden Bereichs (3) und der entsprechenden Öffnung (6) angeordnet ist, wobei der Innendurchmesser der Klemmhülse kleiner ist als der Außendurchmesser wenigstens der freien Enden (9) eines querverlaufenden Bereichs (3), und wobei der Außendurchmesser der Klemmhülse und der Durchmesser einer Öffnung (6) in den längsverlaufenden Bereichen (1; 2) derart sind, daß sie eine klemmende Festlegung dieser hülsenartigen Klemmvorrichtung zwischen dem entsprechenden Ende und der Öffnung ermöglichen, wenn die freien Enden in eine entsprechende Klemmhülse eingesetzt werden.

2. Leiterförmiger Körper nach Anspruch 1, dadurch gekennzeichnet, daß die hülsenförmige Klemmvorrichtung (7, 8) eine Klemmhülse (7) mit einem daran angeformten Flansch (8) ist, wobei die Klemmhülse (7) in eine Öffnung (6) geschoben werden kann, bis der Flansch (8) an der Innenwand (4; 5) des längsverlaufenden Bereichs (1; 2) anliegt.

3. Leiterförmiger Körper, der insbesondere als Träger zum Kanalisieren von zum Beispiel elektrischen Kabeln dient, wobei der leiterförmige Körper zwei im wesentlichen parallele und gegenseitig beabstandete hohle längsverlaufende Bereiche aufweist, die miteinander über eine Vielzahl im wesentlichen parallele und gegenseitig beabstandete querverlaufende Bereiche verbunden sind, deren freien Enden sich in Öffnungen erstrecken, die zu diesem Zweck in den längsverlaufenden Bereichen ausgebildet sind, wobei die einander zugekehrten Innenseiten (4; 5) der zwei längsverlaufenden Bereiche (1; 2) mit Öffnungen (6) versehen sind, in die die freien Enden (9) der querverlaufenden Bereiche (3) klemmend eingreifen können, während die Stirnseiten dieser querverlaufenden Bereiche an der Innenseite (11) der Außenflächen (12) der längsverlaufenden Bereiche anliegen,
**dadurch gekennzeichnet,**
daß eine hülsenförmige Klemmvorrichtung (13) vorgesehen ist, die einen schalenförmigen Körper (13) hat, der an der Innenwand (4; 5) des längsverlaufenden Bereichs (1; 2) ausgebildet ist und in die Richtung auf das Innere der hohlen längsverlaufenden Bereiche (1; 2) gerichtet ist, wobei der schalenförmige Körper (13) so durch einwärtsbördeln des Materials der Innenwand eines längsverlaufenden Bereichs (1; 2) erhalten wird, daß der Innendurchmesser der so ausgebildeten Öffnung kleiner ist als der Außendurchmesser wenigstens der freien Enden (9) eines querverlaufenden Bereichs (3) um den entsprechenden querverlaufenden Bereich (3) in der Öffnung zu verklemmen, wenn die freien Enden (9) in die entsprechende Öffnung (6) eingesetzt werden.

## Revendications

1. Corps en forme d'échelle servant en particulier de support pour canaliser par exemple des câbles électriques, lequel corps en forme d'échelle comprend deux sections longitudinales creuses, mutuellement espacées et sensiblement parallèles, couplées l'une à l'autre à l'aide d'une pluralité de section transversales sensiblement parallèles et mutuellement espacées dont les extrémités libres s'étendent dans des ouvertures prévues, dans ce but, dans les sections longitudinales, les surfaces internes en regard (4 ; 5) des deux sections longitudinales (1 ; 2) étant munies d'ouvertures (6) dans lesquelles les extrémités libres (9) des sections transversales (3) peuvent venir en prise, selon un mode de blocage, cependant que les faces terminales desdites sections transversales peuvent reposer contre l'intérieur (11) des surfaces externes (12) des sections longitudinales ;
caractérisé en ce qu'un dispositif de blocage en forme de manchon (7, 8 ; 13) est disposé entre les extrémités libres (9) d'une section transversale (3) et les ouvertures correspondantes (6), dans lequel le diamètre interne du manchon de blocage est plus petit que le diamètre externe d'au moins les extrémités libres (9) d'une section transversale (3), et dans lequel le diamètre externe du manchon de blocage et le diamètre d'une ouverture (6) dans les sections longitudinales (1 ; 2) sont tels qu'ils permettent la fixation par blocage dudit dispositif de blocage en forme de manchon, entre l'ouverture et l'extrémité correspondante lorsque les extrémités libres sont insérées dans un manchon de blocage correspondant.

2. Corps en forme d'échelle selon la revendication 1, caractérisé en ce que le dispositif de blocage en forme de manchon (7, 8) est un manchon de blocage (7) avec une collerette (8) qui y est formée, ledit manchon de blocage (7) pouvant être déplacé dans une ouverture (6) jusqu'à ce que la collerette (8) puisse reposer contre la paroi interne (4 ; 5) de la section longitudinale (1 ; 2).

3. Corps en forme d'échelle servant en particulier de support pour canaliser par exemple des câbles électriques, lequel corps en forme d'échelle comprend deux sections longitudinales creuses, mutuellement espacées et sensiblement parallèles, couplées l'une à l'autre à l'aide d'une pluralité de sections transversales mutuellement espacées et sensiblement parallèles dont les extrémités libres s'étendent dans des ouvertures prévues dans ce but dans les sections longitudinales (1 ; 2) les surfaces internes en regard (4 ; 5) des deux sections longitudinales (1 ; 2) étant munies d'ouvertures (6) dans lesquelles les extrémités libres (9) des sections transversales (3) peuvent venir en prise, selon un mode de blocage, cependant que les faces terminales desdites sections transversales peuvent reposer contre l'intérieur (11) des surfaces extérieures (12) des sections longitudinales,
caractérisé en ce qu'on prévoit un dispositif de blocage en forme de manchon (13), qui est un corps en forme de coquille (13), réalisé sur la paroi interne (4 ; 5) de la section longitudinale (1 ; 2) et pointant dans la direction de l'intérieur des sections longitudinales creuses (1 ; 2), ledit corps en forme de coquille (13) étant obtenu en rabattant vers l'intérieur le matériau de la paroi interne (4 ; 5) d'une section longitudinale (1 ; 2) de manière que le diamètre interne de l'ouverture (6) ainsi formée soit plus petit que le diamètre externe d'au moins les extrémités libres (9) d'une section transversale (3) de manière à bloquer la section transversale correspondant (3) dans l'ouverture, lorsque les extrémités libres (9) sont insérées dans l'ouverture correspondante (6).
